**Europäisches Patentamt**

**European Patent Office**

**Office européen des brevets**

(19)

(11) Numéro de publication: **0 056 207**
**A1**

# (12) DEMANDE DE BREVET EUROPEEN

(21) Numéro de dépôt: 81401985.7

(22) Date de dépôt: 11.12.81

(51) Int. Cl.³: **G 09 G 1/16, H 04 N 7/04**

(30) Priorité: 12.12.80 FR 8026394

(43) Date de publication de la demande: 21.07.82
Bulletin 82/29

(84) Etats contractants désignés: **DE FR GB IT NL**

(71) Demandeur: **TEXAS INSTRUMENTS FRANCE Société dite:, F-06270 Villeneuve Loubet (FR)**
(84) Etats contractants désignés: **FR**

(71) Demandeur: **TEXAS INSTRUMENTS INCORPORATED, 13500 North Central Expressway, Dallas Texas 75265 (US)**
(84) Etats contractants désignés: **DE GB IT NL**

(72) Inventeur: **Chauvel, Gérard, 10 Avenue des Chénes, F-06800 Cagnes Sur Mer (FR)**

(74) Mandataire: **Moncheny, Michel et al, c/o Cabinet Lavoix 2 Place d'Estienne d'Orves, F-75441 Paris Cedex 09 (FR)**

(54) **Procédé et dispositif pour la visualisation de messages transmis par un signal du type télévision, sur un dispositif d'affichage à trame balayée tel qu'écran d'un tube à rayons cathodiques, ledit message comportant des éléments répétitifs.**

(57) Ce procédé consiste à détecter dans le signal transmis un code à valeur binaire (OO) déterminant le début de la répétition d'un élément de message sur le dispositif de visualisation (18). Le code correspondant est mémorisé en permanence dans un registre fixe (57) dont le contenu est comparé avec le code courant des éléments de message. En cas d'égalité, un comparateur provoque l'inhibition d'un circuit à base de temps (43) assurant le traitement successif des codes des éléments de message. L'inhibition du circuit à base de temps est supprimée par décomptage du nombre de répétitions nécessaire ou par le signal de synchronisation ligne du tube (18).

Ce procédé permet de réduire considérablement la capacité de la mémoire de page (22) dans laquelle sont stockées les éléments de message de chaque page de message à afficher.

Application dans les réseaux de transmission de télétexte.

Procédé et dispositif pour la visualisation de messages transmis par un signal du type télévision, sur un dispositif d'affichage à trame balayée tel qu'écran d'un tube à rayons cathodiques, ledit message comportant des éléments répétitifs.-

La présente invention concerne, d'une façon générale l'affichage de messages sur un dispositif d'affichage à trame balayée tel qu'écran à tube cathodique utilisé notamment en tant que terminal de systèmes de traitement d'information.

Plus particulièrement, l'invention concerne l'édition, la transmission et la réception pour la visualisation de messages contenant des données de composition de pages destinées à être visualisées sur l'écran d'un tube à rayons cathodiques.

A l'heure actuelle, on divise les dispositifs de visualisation sur tube à rayons cathodiques ou autres en deux groupes quant à leur mode d'affichage, le premier d'entre ces modes étant de loin le plus utilisé. Il s'agit de la visualisation en mode dit typographique et en mode dit graphique.

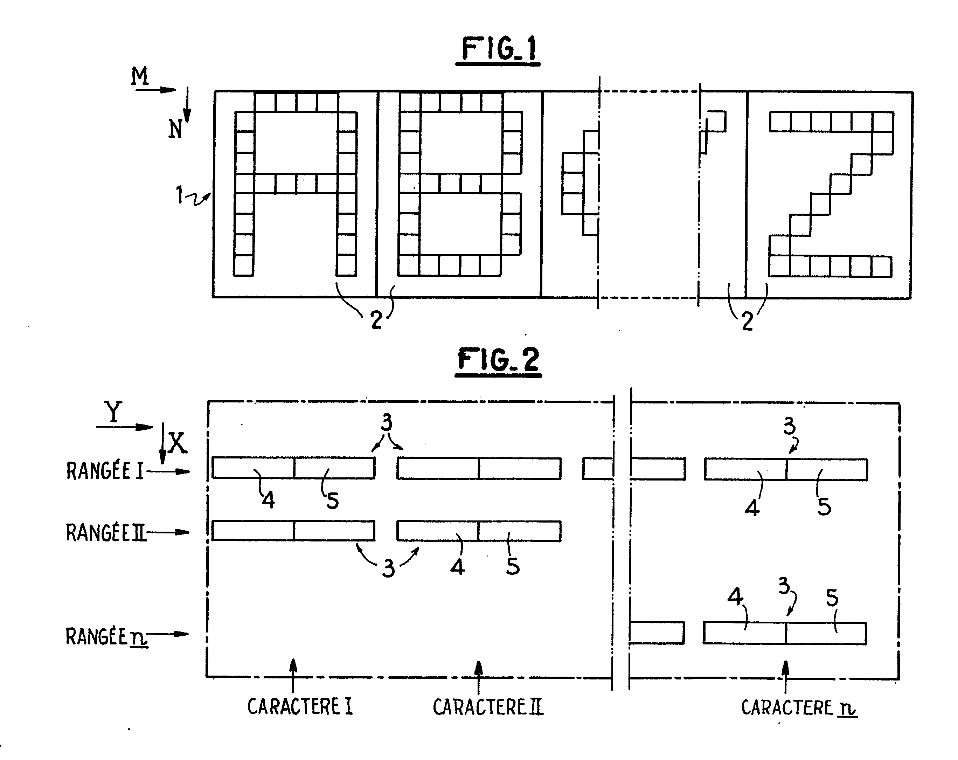

Pour mettre en oeuvre la première de ces méthodes, il est connu d'utiliser des jeux de caractères dont la forme est définie par des matrices composées chacune de N lignes et de M points. La Fig.1 des dessins annexés représente schématiquement une rangée 1 de Y caractères composés à partir de telles matrices 2.

Les matrices sont mémorisées dans un ou plusieurs générateurs de caractères qui sont formés par des mémoires mortes ou par des zones correspondantes d'une mémoire composite associée au circuit commandant le tube à rayons cathodiques. Les générateurs de caractères comportent donc des positions adressables dans lesquelles sont stockées les informations nécessaires à l'affichage de chaque caractère alphanumérique que l'on se propose de visualiser sur l'écran.

Pour afficher une page de texte, l'appareil comporte également au moins une mémoire de page qui est une mémoire vive et dans laquelle sont stockées temporairement c'est-à-dire avant la visualisation de la page, les codes des caractères alphanumériques à visualiser. Chaque caractère ainsi codé est formé

2

de deux parties dont l'une est le code de caractère proprement dit ( en code ASCII, par exemple) et dont l'autre est un code dit d'attributs relatif à la couleur, au fond et à d'autres fonctions devant être réalisées au moment de la visualisation du caractère. La Fig.2 montre très schématiquement la configuration des caractères codés stockés dans une mémoire de page. On voit que chaque caractère codé 3 correspond à un caractère alphanumérique d'une rangée et qu'il est composé d'un code d'attributs 4 et d'un code de caractère 5. Les caractères codés sont rangés dans la mémoire à des positions qui correspondent à celles des caractères affichés sur l'écran.

Par conséquent, chaque fois qu'une page composée de X rangées de Y caractères doit être visualisée, la mémoire de page contient X x Y caractères codés. L'adressage successifs de ces caractères codés permet d'accéder au générateur de caractères provoquant ainsi la visualisation.

Cependant, pendant le déroulement de cette opération, il convient de tenir compte de la façon dont l'image est construite sur l'écran à savoir par balayage d'une trame composée de lignes entrelacées comme cela est bien connu dans la technique vidéo.

Les matrices étant composées de N lignes, chaque rangée de caractères est ainsi affichée par N adressages successifs de toutes les matrices de caractères d'une rangée, cet adressage étant réalisé au rythme du balayage ligne du tube à rayons cathodiques. Après affichage d'une rangée complète, la rangée suivante est visualisée ligne par ligne comme la précédente.

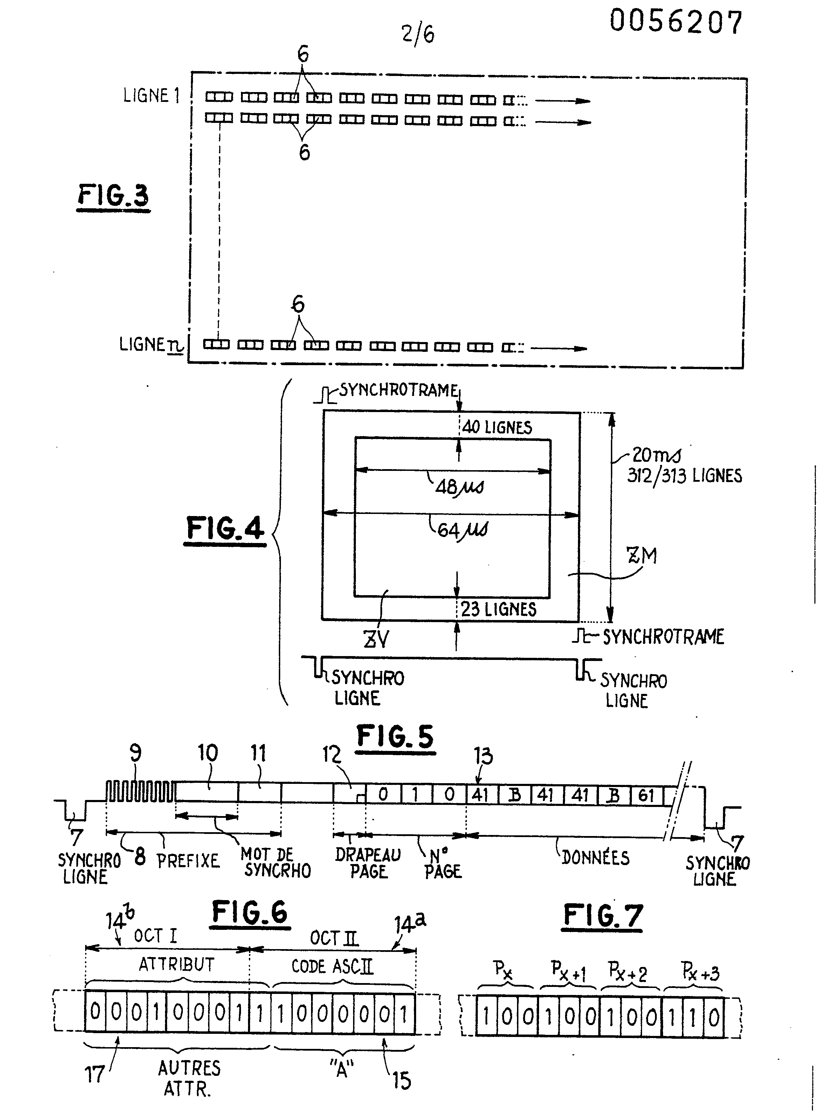

On connaît également un autre mode d'affichage dit graphique dans lequel on n'utilise pas de générateurs de caractères, mais au cours duquel, on emploie une mémoire de page contenant l'information de page sous forme de points distincts 6 (Fig.3) codés de façon binaire. Ce code est en fait un code de fonction relatif à la couleur ou à la nuance de gris du point à afficher. Il est

3

clair qu'une telle méthode permet de dessiner n'importe quelle forme sur l'écran dans la limite de la résolution imposée par la densité des points sur l'écran. Dans ce cas également, les points sont emmagasinés de préférence à des positions de mémoire correspondant à leur position dans l'image affichée au cours de la visualisation. La mémoire de page est lue ligne par ligne au rythme du balayage ligne de l'écran.

L'exemple suivant permet d'illustrer le fait que le mode graphique nécessite une capacité de mémoire nettement plus élevée que celle requise pour le mode typographique. On suppose que chaque matrice de caractères emmagasinée dans le générateur de caractères et affichée sur l'écran comporte 8 x 10 points d'image (M=8, N=10) et que chaque rangée comporte 40 caractères (Y=40). Par ailleurs, chaque caractère nécessite deux octets (caractère et attributs) pour son identification dans la mémoire de page. Enfin, on suppose que chaque page comporte 25 rangées de caractères alphanumériques (X=25). Dans ces conditions, en mode typographique, la mémoire de page doit avoir une capacité de 25 x 40 x 2 = 2000 octets pour l'affichage sur l'écran d'une page complète en mode typographique.

Si, par ailleurs, en mode graphique, on utilise un codage à trois bits pour chaque point ( ce qui permet de lui affecter huit nuances de gris ou huit couleurs d'un nombre de points égal à celui nécessaire pour écrire 40 matrices côte à côte, il faut donc par ligne disposer de 8 x 3 x 40 = 960 bits, ce qui revient à 120 octets par ligne. Pour un nombre égal de lignes d'image (25 x 10), la mémoire de page doit donc pouvoir stocker 250 x 120 = 30 000 octets, si toute la page comporte des éléments graphiques.

On voit donc que, pour obtenir une certaine souplesse dans les possibilités d'affichage tout en pouvant utiliser une capacité mémoire pas trop élevée, il

4

convient de limiter dans toute la mesure du possible l'information à stocker dans la mémoire de page, pour l'affichage d'une page donnée. La limitation de la quantité de données requise pour l'affichage d'une page est évidemment utile non seulement au niveau de la réception du message, mais également lors de l'émission, car le temps d'occupation de l'équipement émetteur pour l'émission d'une page s'en trouve réduit, ce qui rend possible de transmettre plus de données de message par unité de temps et donc, en définitive, un affichage plus rapide du message sur l'écran de l'utilisateur.

Dans les messages à transmettre, il est fréquent que les mêmes signes se répètent pendant un certain temps. Il en est ainsi par exemple des caractères d'espace, se présentant au début et à la fin d'un paragraphe de texte, des soulignements, des intervalles entre rangées de texte, etc.

L'invention a donc pour but en prenant en considération cette caractéristique des messages à transmettre, de limiter la capacité de mémoire de page à une valeur minimale, sans altération de la qualité de la transmission.

L'invention a donc pour objet un procédé pour la visualisation de messages transmis par un signal du type télévision et composés de pages affichées sur un dispositif d'affichage à trame balayée sur lequel les images correspondant à ces pages sont tracées par un balayage ligne par ligne, les données représentatives des éléments de chaque page à afficher sur l'écran étant emmagasinées dans une mémoire de page sous la forme d'un code binaire pour en être extraites sous la commande d'un circuit à base de temps, lui-même commandé par les impulsions de synchronisation faisant partie dudit signal, caractérisé en ce qu'il consiste à mémoriser en permanence une valeur en code binaire représentant un élément d'information caractéristique de l'apparition dans la page

5

du message d'une répétition de durée prédéterminée d'un même élément de message à afficher, en ce que ladite valeur en code binaire est comparée en permanence à celles extraites de la mémoire et en ce qu'en cas d'égalité de la valeur courante et de la valeur emmagasinée en permanence, ledit circuit à base de temps est inhibé pour empêcher la lecture dans la mémoire de page, tant que doit durer l'affichage de l'élément de message répétitif.

Il résulte de ces caractéristiques que la taille de la mémoire de page peut être considérablement réduite, car pour l'affichage répétitif d'un même élément du message sur l'écran, la mémoire de page ne contient qu'une seule fois le code binaire représentatif de cet élément alors que dans la technique antérieure, un tel affichage nécessitait l'emmagasinage du même code binaire autant de fois que l'élément devait être affiché successivement.

Suivant un premier mode de mise en oeuvre de l'invention, le procédé consiste en outre à incorporer dans ledit code binaire, un groupe de codage représentant le nombre de fois que l'élément de message doit successivement être affiché, à introduire ce nombre dans un décompteur et à décrémenter celui-ci jusqu'à zéro chaque fois que l'élément de message est affiché pour déterminer la durée de cet affichage.

Suivant un autre mode de mise en oeuvre, le procédé de l'invention consiste à verrouiller le signal d'inhibition dudit circuit à base de temps dès l'apparition de ladite égalité et à déverrouiller ledit signal par l'impulsion de synchronisation du signal du type télévision suivant l'apparition de l'égalité.

Suivant une autre caractéristique de l'invention, l'élément de message est un élément d'espace accompagné d'un groupe de code représentant la nuance de fond de l'écran pendant l'affichage de cet espace.

Suivant une autre caractéristique, l'affi-

6

chage étant en mode typographique, le procédé consiste à mémoriser dans ladite mémoire de page, une adresse, notamment en code ASCII correspondant à l'élément répétitif du message, et à appliquer cette adresse répétitivement à un générateur de caractères associé à cette mémoire de page pendant l'intervalle de temps que doit durer cet affichage.

Dans ce cas, le procédé consiste notamment à mémoriser en tant que valeur de code binaire le code 00 dans ladite mémoire de page.

L'invention a également pour objet un dispositif pour la mise en oeuvre du procédé de l'invention ainsi qu'un procédé et un réseau de transmission de messages comportant application du procédé tel que défini ci-dessus.

D'autres caractéristiques et avantages de l'invention apparaîtront au cours de la description qui va suivre, donnée uniquement à titre d'exemple et faite en se référant aux dessins annexés, sur lesquels :

- la Fig.1 est une représentation schématique d'une rangée de caractères alphanumériques composés de matrices de visualisation stockées dans un générateur de caractères et destinées à la visualisation d'éléments typographiques d'un message composé de pages de texte;

- la Fig.2 est une représentation schématique de l'emmagasinage dans une mémoire de page des caractères codés relatifs au contenu du générateur de caractères de la Fig.1;

- la Fig.3 est une représentation schématique de l'emmagasinage dans une mémoire de page des données relatives à une visualisation en mode graphique d'éléments d'un message composé de pages de texte;

- la Fig.4 est une représentation schématique d'un écran de télévision pour montrer comment est située dans une image vidéo transmise selon les standards classiques, la zone réellement visible par l'observateur;

- la Fig.5 représente un exemple d'un signal relatif aux données pouvant être utilisées pour la transmission d'une ligne vers un poste récepteur d'un système de télétexte connu sous la dénomination " Antiope ", (mode typographique);

- la Fig.6 montre schématiquement le contenu d'un caractère codé écrit dans une mémoire de page pour le mode typographique;

- la Fig.7 montre un schéma analogue pour l'écriture dans la mémoire de page des données de visualisation graphique;

- la Fig.8 est une représentation symbolique de l'écriture en mémoire d'une page de données relatives respectivement aux modes typographique et graphique, conforme aux caractéristiques du mode de mise en oeuvre préféré de l'invention;

- la Fig.9 est un exemple d'une image réellement visible sur l'écran lorsque le procédé suivant l'invention est appliqué;

- la Fig.10 est un schéma général d'un poste récepteur destiné à la visualisation de pages de télétexte conformément au système de télétexte " Antiope" poste récepteur qui met en oeuvre le procédé suivant l'invention;

- la Fig.11 montre un schéma de principe d'un circuit de ce poste récepteur mettant en oeuvre le procédé de l'invention;

- la Fig.12 est un schéma symbolique d'un réseau de transmission mettant en oeuvre une application du procédé suivant l'invention.

L'invention va être décrite en tant qu'application dans un système de télétexte appelé " Antiope " mais il est entendu qu'elle peut être appliquée dans tous les cas où il s'agit d'afficher sur un tube à rayons cathodiques ou autre, des messages composés de pages et contenant de

8

l'information typographique et graphique.

Un exemple d'une telle application est un terminal d'un ordinateur ou autre système analogue de traitement de l'information.

Pour la clarté de l'exposé, il est utile de rappeler brièvement les caractéristiques essentielles du système de télétexte dénommé " Antiope ". Toutefois pour plus de détails, il y a lieu de se reporter aux ouvrages suivants :

1) un article de la revue de Radio Diffusion-Télévision n° 40-1975 par Bernard Marti et Michel Mauduit;

2) un article de la revue IEEE volume CE-25 n° 3 Juillet 1979 par P. Frandon et G. Chauvel , cet article décrivant l'architecture générale du poste récepteur; et

3) un cahier de spécifications du système de télétexte " Antiope " édité par le Centre Commun d'Etudes de Télévision et de Communications ( CCETT).

Le système de télétexte Antiope comporte un terminal de visualisation qui peut recevoir ses informations d'entrée d'une ligne téléphonique ou bien d'un signal de télévision diffusé par un émetteur et comportant en plus de l'information analogique relative aux images vidéo construites de façon classiques, de l'information sous forme binaire placée en multiplex sur le signal vidéo émis dans les intervalles laissés libres par les standards classiques de télévision tels que SECAM, PAL, NTSC, etc.

La Fig.4 des dessins annexés montre schématiquement la configuration d'une trame normalisée de télévision dans laquelle le rectangle intérieur ZV correspond à la zone réellement visible sur l'écran, l'espace marginal ZM correspondant notamment à 40 lignes en haut et 23 en bas de cette zone n'étant pas visible. Ainsi, dans un tel signal vidéo, chaque signal de trame situé

9

entre deux impulsions de synchronisation de trame comporte une partie vidéo destinée à tracer une image vidéo par le signal vidéo analogique classique ainsi qu'une partie, d'une durée de vingt lignes, par exemple, destinée à la transmission du télétexte, par un signal se présentant sous forme binaire.

L'intervalle de temps nécessaire pour le balayage de ces lignes est donc rempli par un signal numérique dont la composition peut être celle de la Fig.5 qui représente un exemple des données qui peuvent être transmises entre deux impulsions de synchronisation ligne.

L'originalité et les avantages considérables résultant du système Antiope par rapport aux autres systèmes de télétexte connus réside dans le fait que la transmission du message est totalement asynchrone et indépendante par rapport à la visualisation sur l'écran, le poste récepteur étant équipé de moyens lui permettant d'interpréter les données reçues,de les accumuler et de les visualiser sur l'écran d'une façon correcte, indépendamment du débit des données reçues.

Le signal ou paquet de données transmis entre deux impulsions de synchronisation ligne 7 comporte un préfixe 8 composé de huit octets décomposés en les éléments suivants :

- une salve de synchronisation 9 destinée à la synchronisation de l'oscillateur de l'appareil récepteur et à servir de référence à la reconstitution des octets suivants ( 3 octets);

- une identification de magazine 10 (3 octets) pour permettre la reconnaissance de l'appartenance du paquet de données à un magazine de pages donné;

- un groupe 11 de deux octets comportant un indice de nombre de paquets (1 octet) successifs émis pour le magazine concerné, ainsi qu'un indice de format qui contient le nombre total des octets dans le paquet considéré, ce nombre pouvant varier d'un signal à l'autre.

10

Le signal comporte également 32 octets de données dont des octets 12 de drapeau de page qui indiquent le numéro de la page de magazine dont font partie les données considérées. Ensuite, dans le cas de la Fig.2, suit l'information 13 à visualiser réellement composée d'octets représentant dans le cas du mode typographique illustré et pour chaque caractère à afficher un code de caractère normalisé ( le code ASCII par exemple), ainsi qu'un code dit d'attributsqui désigne certaines caractéristiques du caractère à afficher (couleur,par exemple).

Ainsi, comme représenté sur la Fig.6, on voit que le caractère " A " à afficher peut être transmis sous la forme de deux octets 14a et 14b comportant de droite à gauche le code ASCII 15 (100-0001 en l'occurence) sur sept bits, ainsi qu'un code d'attributs 17 qui peut être la couleur du caractère ou sa taille par exemple. Les données de caractères peuvent alterner avec des données relatives au fond de l'image ou à d'autres éléments du message, tels que le code espace, un code de ligne dans le cas ou des lignes de l'image doivent être sautées, etc.

Bien entendu, les codes ainsi contenus dans chaque intervalle entre deux impulsions de synchronisation sont, dans le cas du mode typographique,des caractères codés devant être écrits dans une mémoire de page qui coopère avec un ou plusieurs générateurs de caractères utilisés pour la visualisation sur l'écran.

Il en va différemment dans le cas où le message contient des données relatives au mode graphique. La Fig.7 représente une partie des données pouvant être transmises et interprétées par le poste récepteur. Chaque point d'image Px, Px + 1, Px + 2, Px +3 ... est transmis sous la forme d'un code à 3 bits désignant en fait la valeur d'une échelle des couleurs primaires ou de nuances de gris et à la réception ces données sont stockées dans la mémoire de page pour être visualisées sans l'aide des générateurs de caractères.

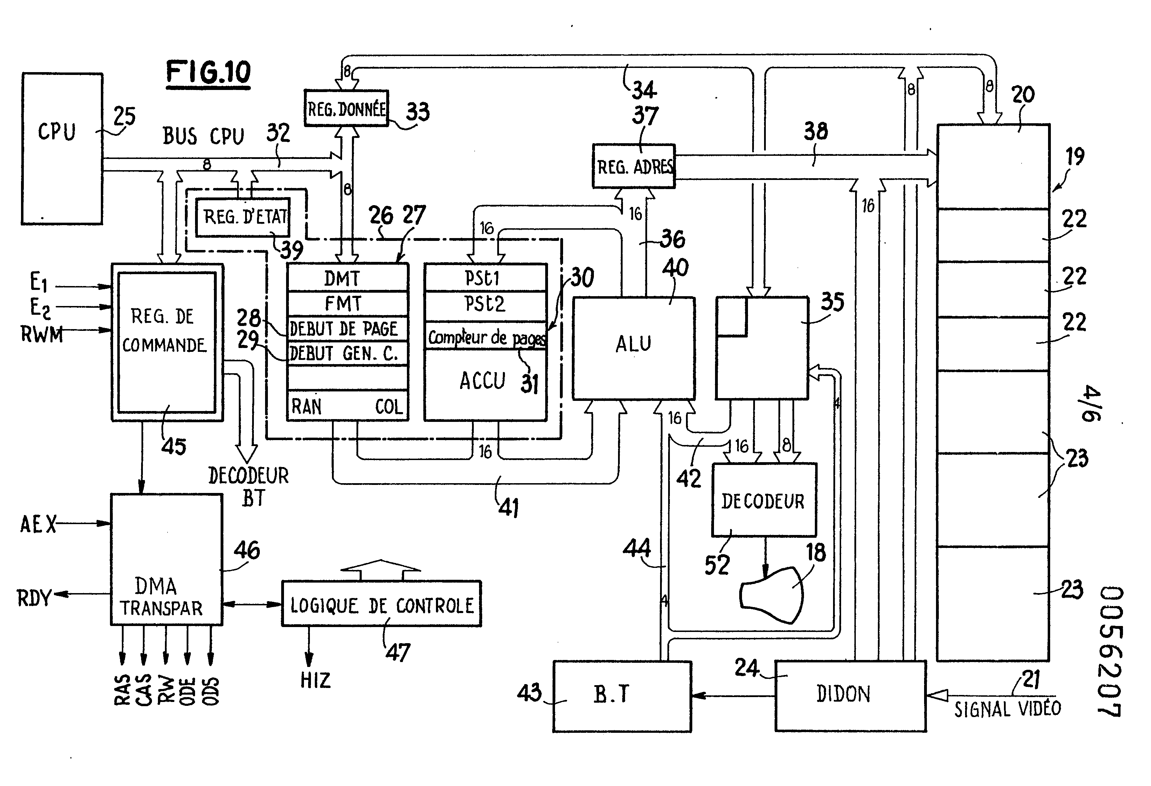

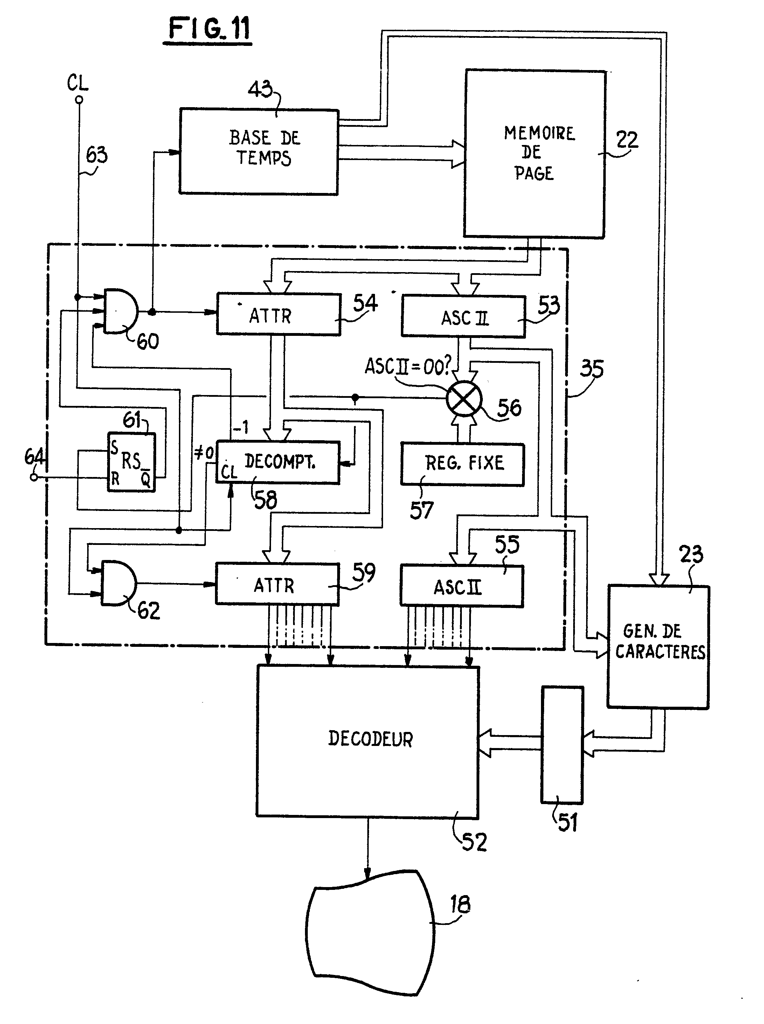

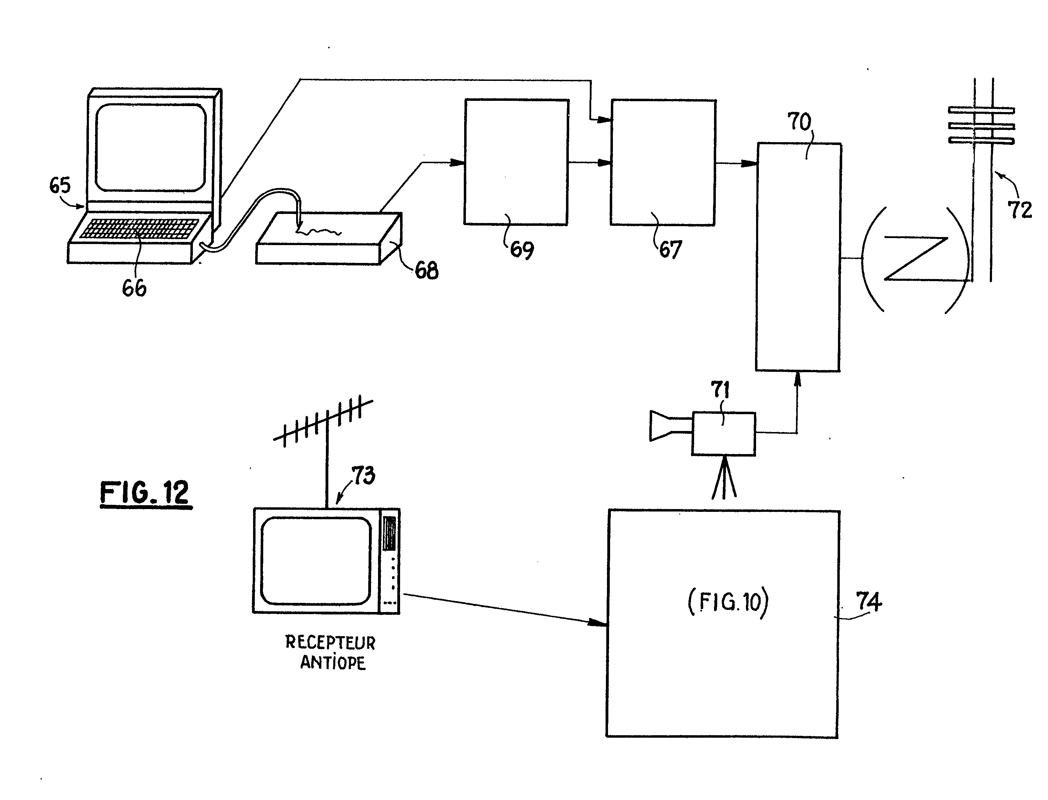

Le schéma de principe représenté sur la Fig.10 concerne la partie du poste récepteur du système Antiope capable de séparer l'information binaire relative au télétexte du signal vidéo émis et de transformer cette information en des images affichées sur un écran d'un tube cathodique, ici schématisé en 18.

Le poste ou terminal comporte une mémoire composite 19 dont les sections sont affectées au stockage de données de natures diverses. Tout d'abord, cette mémoire composite comporte une zone qui constitue une mémoire tampon 20 capable de stocker provisoirement des données d'entrée séparées du signal vidéo appliqué au terminal (flèche 21). On trouve une description détaillée de cette mémoire tampon ainsi que de ces circuits annexés dans la demande de brevet déposée ce jour au nom de la Demanderesse pour " Procédé et dispositif pour permettre l'échange d'informations entre des systèmes de traitement d'information à vitesses de traitement différentes.

En outre, la mémoire 19 comporte plusieurs zones 22 affectées à l'emmagasinage de pages d'information devant être affichées, ces zones étant appelées mémoires de page et d'autres zones 23 affectées au stockage de l'information de caractères appelées générateurs de caractères. Ces dernières zones peuvent être du type mémoire morte tandis que les zones 22 sont des mémoires vives comme l'est naturellement la mémoire tampon 20.

Le signal vidéo multiplexé 21 est appliqué à un circuit séparateur 24 appelé " Didon " dans le deuxième article cité ci-dessus pour séparer l'information de télétexte, du signal vidéo destiné à la diffusion d'images vidéo classiques.

Dans le dispositif de la Fig 10, la gestion de l'ensemble des données provenant de la mémoire tampon 20 est assurée par une unité de traitement central 25 ( CPU)

12

et par ses organes périphériques associés. Cette unité 25 est chargée notamment de traiter la partie des paquets de données contenant les informations d'affichage proprement dites telles que les informations de mode typographique ou graphique.

Le circuit de commande de la mémoire tampon 20 est représenté essentiellement dans le cadre en pointillés 26 de la Fig.10 et il assure la gestion du contenu de la mémoire tampon 20 de la manière décrite dans la demande de brevet précitée. Des registres DMT (début de Mémoire Tampon) et FMT ( Fin de Mémoire Tampon) font partie d'une pile de registres 27 contenant également d'autres registres pour stocker des adresses relatives à d'autres zones de la mémoire composite 19. Par exemple, il est prévu un registre 28 d'adresse de début de page et un ou plusieurs registres 29 d'adresse de début de générateur de caractères. Par ailleurs, il est prévu un accumulateur 30 qui comporte notamment des compteurs ou pointeurs $PST_1$ et $PST_2$ de la mémoire tampon 20 ainsi que d'autres compteurs tel qu'un compteur 31 des pages du magazine transmis.

La pile de registres 27 est reliée au réseau de bus de données 32 connecté à un registre de données 33 lui-même relié par le bus 34 à la mémoire 19, au séparateur Didon 24 et à un dispositif 35 de traitement des données typographiques et graphiques devant être affichées sur l'écran du tube 18. Ce dispositif de traitement 35 comporte également des moyens pour, conformément à la présente invention, assure l'affichage d'éléments de message répétitifs sur l'écran du tube 18. Ce dispositif sera décrit en détail ci-après.

L'accumulateur 30 est relié à un bus d'adresses 36 communiquant avec un registre d'adresses 37 qui est connecté à son tour à l'entrée d'adresses de la mémoire 19 par un bus 38.

13

Un registre d'état 39 est relié au bus 32 communiquant avec l'unité de traitement central 25.

Le dispositif d'affichage de télétexte comporte également une unité arithmétique et logique 40 chargée d'élaborer les adresses devant être envoyées à la mémoire 19 d'une part à partir de la pile de registres 27 et de l'accumulateur 30 par un bus 41 et d'autre part à partir du dispositif 35 de traitement par un bus 42 sur lequel circulent les adresses en code ASCII des caractères stockées dans les générateurs de caractères 23 de la mémoire composite 19.

Un circuit de base de temps 43 relié au dispositif séparateur Didon 24 et aux divers autres organes du dispositif d'affichage par des bus 44 assure la synchronisation de toutes les opérations.

Un registre de commande 45 assure la gestion des données circulant sur les bus pour les introduire dans les registres appropriées, tandis qu'un dispositif 46 d'accès direct à la mémoire de type transparent assure la gestion de l'accès à la mémoire 19 par les divers organes du dispositif d'affichage sans qu'il y ait interaction possible entre ces organes. On trouve une description détaillée d'un tel dispositif d'accès direct à la mémoire dans la demande de brevet déposée sous le n° 77 31 140 le 17 Octobre 1977 au nom de la Demanderesse et ayant pour titre " Dispositif d'accès direct à une mémoire associée à un microprocesseur ".

Le dispositif 46 d'accès direct à la mémoire est associée à une logique de contrôle 47.

Après avoir examiné l'architecture générale du poste récepteur ou terminal , on va maintenant décrire plus en détail le procédé suivant l'invention et sa mise en oeuvre dans ce poste récepteur en examinant le dispositif de traitement 35 mentionné ci-dessus qui est

14

conçu spécialement à cet effet.

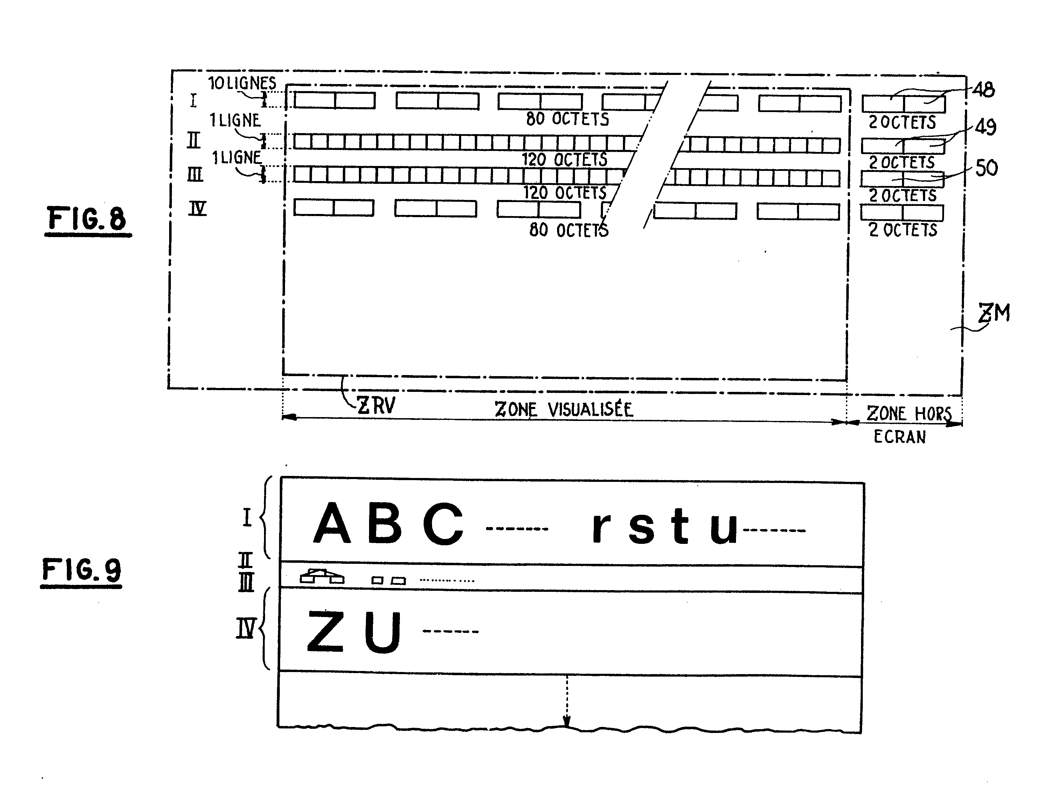

Toutefois, avant de décrire la partie du dispositif de traitement affectée à l'invention, on décrira tout d'abord brièvement le processus exécuté par le dispositif de traitement pour permettre l'affichage de messages contenant dans chaque page un mélange d'éléments typographiques et d'éléments graphiques. Pour cela, il y a lieu de se reporter d'abord aux Fig.8 et 9, une description détaillée de ce processus pouvant être trouvée dans la demande de brevet déposée ce même jour au nom de la Demanderesse pour " Procédé et dispositif pour la visualisation de messages composés de pages sur un dispositif d'affichage à trame balayée, tel qu'écran d'un tube à rayons cathodiques.

La Fig.8 montre schématiquement le contenu d'une mémoire de page recevant les données d'une page par transfert de ces données à partir de la mémoire tampon 20 sous la commande du circuit de commande 26.

Dans l'exemple représenté, on suppose que la page à afficher comporte une partie typographique ainsi qu'une partie graphique réparties chacune sur un certain nombre de lignes de l'image. Ainsi, la mémoire de page comporte une première rangée I d'adresses typographiques constituées chacune par un octet d'attributs et un octet de code ASCII, relatifs à un caractère à afficher. Dans l'exemple décrit, cette rangée d'adresses comporte donc 80 octets et sur l'écran, la rangée de caractères affichés occupe dix lignes d'image. Les octets ainsi stockés dans la mémoire sont utilisés pour la visualisation et commandent un générateur de caractères de la façon déjà décrite, et ils concernent donc uniquement la zone réellement visible sur l'écran indique en ZRV. Toutefois, on sait que l'image visible est bordée de zones marginales ZM si bien que chaque rangée d'adresses dans la mémoire de page peut comporter une partie comportant, par exemple en fin de rangée, une zone de mémoire dans laquelle on peut ranger des octets. Ce concept est mis à profit dans l'invention pour identifier la nature d'une rangée suivante d'adresses contenues dans la mémoire de page. Ces octets se trouvent naturellement contenus dans le signal que l'on a décrit ci-dessus à propos de la Fig.5 et ils sont interprétés par les circuits du poste récepteur pour commander la mise en état d'affichage typographique ou graphique suivant le cas.

Sur la Fig.8, les octets 48 sont donc destinés à identifier la nature de la rangée suivante des adresses de la mémoire de page, cette rangée étant dans cette exemple une rangée graphique.

Cette rangée II est composée, pour ce qui concerne la zone ZRV, de 120 octets contenant 3 bits d'information pour 320 points d'image à visualiser  et elle se termine par deux octets d'identification 49 relatifs à l'affichage de la rangée III suivante qui est ici encore de nature graphique,   dont le contenu est également de 120 octets et qui se termine par deux octets d'identification 50. Ceux-ci, dans l'exemple, déterminent la rangée IV suivante de nature typographique.

Ainsi, on peut stocker une page de télétexte dans une mémoire de page en mélangeant des éléments typographiques et graphiques jusqu'à concurrence de la capacité totale de la mémoire de page.

La  Fig.9 représente l'image que l'on peut voir réellement sur l'écran 18 lorsque la mémoire de page est chargée avec l'information de la Fig.8.

La Fig.11 représenté un schéma simplifié d'un dispositif pour la mise en oeuvre de l'invention.

On voit que le circuit à base de temps 43 communique avec la mémoire de page 22 pour en extraire les caractères codés (mode typographique) destinées à être envoyée au générateur de caractères 23 pour que ce dernier puisse charger un registre de points 51 lui-même relié à un décodeur 52 préparant les données qui lui sont appli-

16

quées, pour l'affichage sur l'écran 18.

Les données extraites de la mémoire de page sont introduites, pour ce qui est du code ASCII dans un premier registre de code ASCII 53 et quant au code d'attributs dans un premier registre d'attributs 54. La sortie du premier registre 53 est relié à un second registre 55 de code ASCII et également au générateur de caractères 23. Enfin, elle est reliée à une première entrée d'un comparateur 56. La seconde entrée de ce comparateur est connectée à un registre fixe 57 qui conserve en mémoire le code ASCII du code représentant la répétition.

Les données d'attributs rangées dans le registre 54 sont appliquées à un décompteur 58 ainsi qu'à un second registre d'attributs 59 relié au décodeur 52. Le registre 54 charge le décompteur avec un nombre correspondant au nombre de répétitions à effectuer.

Une première porte ET 60 à trois entrées reçoit le signal d'horloge CL du système ( 1 $\mu$ sec. par exemple) sur sa première entrée, le signal de la sortie -1 du décompteur 58 sur sa deuxième entrée, tandis que sa troisième entrée est reliée à la sortie $\overline{Q}$ d'une bascule RS 61. La sortie de la porte ET 60 est connectée au registre d'attributs 54 et au circuit à base de temps 43.

Une sortie $\neq$ 0 du décompteur 58 est reliée à une entrée d'une deuxième porte ET 62 dont l'autre entrée est reliée à la ligne 63 de signal d'horloge CL. Sa sortie est connectée au registre d'attributs 59.

La ligne 63 est également connectée à l'entrée d'horloge du décompteur 58.

La sortie du comparateur 56 activée en cas d'égalité de ses deux entrées est reliée au décompteur 58 et à l'entrée de déclenchement S de la bascule RS dont l'entrée de rétablissement R est relié à une bor-

17

ne 64 sur laquelle est appliqué le signal de synchronisation ligne.

Le fonctionnement de ce circuit est le suivant. Le circuit à base de temps 43 provoque l'adressage de la mémoire de page 22 dont les données d'attributs et le code ASCII sont extraits. Ces données sont normalement transférées au décodeur 52, soit par l'intermédiaire du registre 59 (attributs) soit par l'intermédiaire du générateur de caractères 23 et du registre 51 ( données de caractères).

Le contenu du registre 53 est comparé en continu à celui du registre fixe 57 qui contient le code de répétition. Lorsque les valeurs sont égales, la valeur de répétition introduite à cet instant dans le registre d'attributs 54 est chargée dans le décompteur 58 dont la sortie-1 bloque par l'intermédiaire de la porte ET 60, l'application des signaux d'horloge CL au circuit à base de temps 43 et au registre 54. Par conséquent, tant que la porte ET reçoit l'information -1 du décompteur 58, le circuit à base de temps 43 ne peut plus provoquer l'adressage de la mémoire de page 22 et ce pendant toute la période de décomptage.

Pendant cette période, les registres 55 et 59 conservent la valeur du code ASCII et celle des attributs qui ont précédées l'instant d'égalité des valeurs dans les registres 53 et 57, de sorte que le signe correspondant à ce dernier code ASCII est affiché sur l'écran dans les conditions déterminées par les valeurs d'attributs conservées dans le registre 59 pendant toute la période de décomptage du décompteur 58. Ce registre 59 est bloqué par la porte ET 62 recevant un signal ≠ 0 du décompteur 58. Lorsque celui-ci atteint la valeur -1, un nouvel adressage de la mémoire de page 22 est rendu possible par le déblocage de la porte ET 60. L'affichage peut alors se poursuivre sur la base des codes contenus dans la mémoire de page 22.

Le registre 57 est chargé en permanence avec

18

un code qui provoque la répétition. Il peut s'agir par exemple du code ASCII auquel est comparé chaque code ASCII introduit dans le registre 53. Toutefois, ce code ASCII OO n'est jamais affiché sur l'écran, car dès que le décompteur 58 atteint la position -1, les nouveaux codes sont transférés dans les registres 53 et 54.

Le fonctionnement décrit ci-dessus concerne le cas où la répétition sur l'écran n'occupe pas la largeur totale d'une rangée que ce soit en mode typographique ou en mode graphique. Le nombre de répétitions du même signe est déterminé par les attributs du code de répétition dont le chargement dans le registre 53 provoque le blocage du processus d'extraction des codes et attributs de la mémoire de page. En d'autres termes, cette largeur de répétition est déterminée par le nombre de l'attribut.

Si la répétition doit continuer jusqu'à la fin d'une ligne ou d'une rangée sur l'écran, l'invention prévoit d'utiliser avantageusement les impulsions de synchronisation ligne qui sont appliquées sur la borne 64. Lorsque le code de répétition (OO en code ASCII par exemple) est chargé dans le registre 53, le comparateur 56 déclenche la bascule 61 qui a son tour bloque la porte ET 60 interdisant ainsi l'adressage de la mémoire de page 22. Les données des registres 55 et 59 sont donc affichées répétitivement jusqu'à ce que l'impulsion de synchronisation ligne rétablit la bascule 61 vers son état initial.

Ainsi, l'invention permet de réduire considérablement la taille de la mémoire de page, car les données correspondant à une suite de signes ou points identiques à afficher ne nécessitent que deux emplacements de mémoire. En mode typographique, par exemple, une rangée vide, les espaces terminant une rangée jusqu'à la marge de droite, ceux commençant en début de paragraphe, ceux se situant de part et d'autre d'une en-tête, d'une tête de chapitre, etc, nécessitent un minimum de données à stocker. Ainsi, une rangée vide commençant par un code ASCII " espace " suivi du code de répétition, ne demande le stockage que de quatre octets alors qu'auparavant, il fallait 80 octets pour provoquer l'affichage des 40 espaces de cette rangée. En mode graphique, le même principe peut être appliqué par exemple lorsqu'une rangée de points doit présenter totalement ou en partie une couleur uniforme.

Sur la Fig.11, on n'a représenté que le montage assurant la répétition des caractères en mode typographique. On peut concevoir facilement à partir du schéma de la Fig.11, un circuit assurant par le même principe l'affichage à répétition en mode graphique, les données de répétition étant alors contenues de préférence dans des octets en fin de ligne, dans une zone de la mémoire de page correspondant à celle qui n'est pas visible sur l'écran.

La Fig.12 illustre le procédé de transmission de données dans lequel le procédé décrit ci-dessus est appliqué. A l'émission, il est prévu un terminal de composition 65 qui envoie des données de composition introduites à l'aide du clavier 66 à un générateur 67 de language Antiope (voir les ouvrages précités).

Le terminal est associé à une table de composition graphique 68 qui envoie des données à un générateur 69 de language graphique. Ces données sont mises sous forme de paquets d'informations (Fig.5) et mélangées dans un multiplexeur 70 à un signal vidéo capté par une caméra 71. Le multiplexeur 70 est relié à un émetteur 72 pour que le signal multiplexé soit diffusé sur un canal de télévision.

A la réception, un poste récepteur vidéo 73 est muni d'un appareil complémentaire 74 qui comporte un circuit tel que représenté sur la Fig.10.

20

Le signal issu du générateur 67 comprend en ce qui concerne le processus de répétition décrit ci-dessus, un code de répétition (OO en code ASCII, par exemple), qui peut être composé par l'opérateur sur le clavier 66, lorsque le texte à transmettre comporte une répétition.

21

<u>REVENDICATIONS</u>

1. Procédé pour la visualisation de messages transmis par un signal du type télévision et composés de pages affichées sur un dispositif d'affichage à trame balayée sur lequel les images correspondant à ces pages sont tracées par un balayage ligne par ligne, les données représentatives des éléments de chaque page à afficher étant emmagasinées dans une mémoire de page sous la forme d'un code binaire pour en être extraites sous la commande d'un circuit à base de temps, lui-même commandé par les impulsions de synchronisation faisant partie dudit signal, caractérisé en ce qu'il consiste à mémoriser en permanence une valeur en code binaire (OO) représentant un élément d'information caractéristique de l'apparition dans la page du message d'une répétition de durée prédéterminée d'un même élément de message à afficher, en ce que ladite valeur en code binaire est comparée (56) en permanence à celles extraites de la mémoire (22) et en ce qu'en cas d'égalité de la valeur courante et de la valeur emmagasinée en permanence, ledit circuit à base de temps (43) est inhibé pour empêcher la lecture dans la mémoire de page (22) tant que doit durer l'affichage de l'élément de message répétitif.

2. Procédé suivant la revendication 1, caractérisé en ce qu'il consiste en outre à incorporer dans ledit code binaire (OO), un groupe de codage représentant le nombre de fois que l'élément de message doit successivement être affiché, à introduire ce nombre dans un décompteur (58) et à décrémenter celui-ci jusqu'à zéro chaque fois que l'élément de message est affiché pour déterminer la durée de cet affichage.

3. Procédé suivant la revendication 1, caractérisé en ce qu'il consiste à verrouiller (61) le signal d'inhibition dudit circuit à base de temps dès l'apparition de ladite égalité (56) et à déverrouiller (61) ledit signal par l'impulsion de synchronisation (64) du signal
du type télévision suivant l'apparition de l'égalité.

4. Procédé suivant l'une quelconque des revendications 2 et 3, caractérisé en ce que l'élément de message est un élément d'espace accompagné d'un groupe de codes représentant la nuance du fond de l'image pendant l'affichage de cet espace.

5. Procédé suivant l'une quelconque des revendications 1 à 4, caractérisé en ce que l'affichage étant en mode typographique, il consiste à mémoriser dans ladite mémoire de page (22), une adresse, notamment en code ASCII correspondant à l'élément répétitif du message et à appliquer cette adresse répétitivement à un générateur de caractères (23) associé à cette mémoire de page (22) pendant l'intervalle de temps que doit durer cet affichage.

6. Procédé suivant la revendication 5, caractérisé en ce que ladite valeur de code binaire caractéristique d'une répétition est le code OO.

7. Dispositif pour la mise en oeuvre du procédé tel que défini dans l'une quelconque des revendications 1 à 6, comprenant un dispositif d'affichage à trame balayée, au moins une mémoire de page, au moins un générateur de caractères, des moyens pour emmagasiner temporairement des données relatives à une page dans la mémoire de page et pour extraire ces données de cette mémoire en vue de la visualisation, le cas échéant par l'intermédiaire du générateur de caractères, lesdites données étant interprétées dans des moyens de traitement qui par l'intermédiaire d'un décodeur sont reliés au dispositif d'affichage à trame balayée, ledit dispositif comportant en outre un circuit à base de temps chargé de coordonner et de synchroniser le transport des données en fonction du balayage de l'écran, ce dispositif étant caractérisé en ce que lesdits moyens de traitement (37) comprennent un premier registre (53) pour recevoir le code courant de l'élément de message provenant de ladite mémoire de page, un second registre (57) contenant en permanence ladite valeur de code binaire (OO) déterminant une répétition dans le texte de la page à afficher, un comparateur (56) relié entre lesdits registres (53 et 57) et des moyens (58,60 à 63) pour inhiber ledit circuit à base de temps (43) à l'apparition d'une égalité entre les contenus des premier et second registres (53,57), lesdits moyens comportant en outre un troisième registre (55) pour mémoriser les données relatives à l'élément de message à répéter pendant l'intervalle de temps que la répétition doit durer au niveau de la visualisation.

8. Dispositif suivant la revendication 7, pour la mise en oeuvre du procédé tel que défini dans la revendication 2, caractérisé en ce qu'il comporte un quatrième registre (54) destiné à recevoir des attributs du code courant de l'élément de message provenant de ladite mémoire et notamment le nombre de fois que l'élément de message répétitif doit être affiché à l'apparition de l'égalité entre les contenus desdits premier et second registres (53,57) et en ce que lesdits moyens d'inhibition comportent un décompteur (58) communiquant avec ledit quatrième registre (54) pour recevoir ledit nombre, ainsi qu'une porte logique (60) permettant d'empêcher le passage d'un signal d'horloge (CL,63) vers ledit circuit à base de temps (43) pendant la période de décomptage dudit décompteur.

9. Dispositif suivant la revendication 7, pour la mise en oeuvre du procédé tel que défini dans la revendication 3, caractérisé en ce qu'il comporte une bascule de mémorisation (61) connecté audit comparateur (56) pour mémoriser l'égalité entre les contenus desdits premier et second registres (53,55) en étant placé dans un premier état , ladite bascule étant connectée à une borne (64) de rétablissement dans un autre état recevant le signal de synchronisation ligne dudit dispositif d'affichage (18),

0056207

24

ledit dispositif comportant en outre une porte logique (60) connectée à ladite bascule et permettant d'empêcher le passage d'un signal d'horloge (CL,63) vers ledit circuit à base de temps (43) pendant que ladite bascule (64) se trouve dans son premier état.

10. Dispositif suivant l'une quelconque des revendications 8 et 9 caractérisé en ce qu'il comprend en outre un cinquième registre (59) communiquant avec ledit quatrième registre (54) pour mémoriser les attributs des éléments de message à afficher sur l'écran, y compris les attributs de fond devant être visualisées pendant les périodes de répétition d'un même élément de message.

11. Dispositif suivant l'une quelconque des revendications 7 à 10, caractérisé en ce que ladite valeur en code binaire est la valeur 00, en code ASCII.

12. Procédé de transmission de messages destinés à être visualisés sur au moins un dispositif d'affichage à trame balayée et comportant application du procédé tel que défini dans les revendications 1 à 6, caractérisé en ce qu'il consiste à l'émission, à adjoindre audit signal du type télévision une valeur en code binaire parmi des paquets de données contenant l'information représentant le texte du message, ladite valeur en code binaire, étant utilisé chaque fois que des éléments de message doivent être répétés.

13. Procédé suivant la revendication 12, caractérisé en ce que lesdits paquets de données contenant des éléments de message sous forme de codes ASCII, ladite valeur en code binaire est le code 00.

14. Réseau de transmission pour la mise en oeuvre du procédé tel que défini dans l'une quelconque des revendications 12 et 13, comportant des moyens de composition pour engendrer des paquets de données représentant des éléments d'un message composés de pages à visualiser sur le dispositif d'affichage d'au moins un poste récepteur, un canal de transmission et un poste récepteur équipé pour rece-

25

voir lesdits paquets de données et les interpréter pour la visualisation sur ledit écran, réseau caractérisé en ce que lesdits moyens de composition (65,66) comportent des moyens pour engendrer ladite valeur en code binaire (OO) chaque fois qu'un élément de message doit être répété lors de l'affichage.

## FIG.1

M →

N ↓

1

2

2

## FIG.2

Y →

↓X

RANGÉE I →

3

4

5

3

RANGÉE II →

3

4

5

3

4

5

RANGÉE n →

4

3

5

CARACTERE I

CARACTERE II

CARACTERE n

0056207

**FIG.3**

LIGNE 1

6

6

LIGNE n

6

**FIG.4**

SYNCHROTRAME

40 LIGNES

48 µs

64 µs

20 ms
312/313 LIGNES

ZM

23 LIGNES

ZV

SYNCHROTRAME

SYNCHRO LIGNE

SYNCHRO LIGNE

**FIG.5**

9    10    11    12    13

| 0 | 1 | 0 | 41 | B | 41 | 41 | B | 61 |

7

8    PREFIXE

MOT DE SYNCRHO

DRAPEAU PAGE

N° PAGE

DONNÉES

SYNCHRO LIGNE

SYNCHRO LIGNE

**FIG.6**

$14^b$        OCT I

OCT II        $14^a$

ATTRIBUT        CODE ASCII

| 0 | 0 | 0 | 1 | 0 | 0 | 0 | 1 | 1 | 0 | 0 | 0 | 0 | 0 | 1 |

17        AUTRES ATTR.

"A"        15

**FIG.7**

$P_x$        $P_{x+1}$        $P_{x+2}$        $P_{x+3}$

| 1 | 0 | 0 | 1 | 0 | 0 | 1 | 0 | 0 | 1 | 1 | 0 |

**FIG.8**

I — 10 LIGNES — 80 OCTETS — 2 OCTETS — 48

II — 1 LIGNE — 120 OCTETS — 2 OCTETS — 49

III — 1 LIGNE — 120 OCTETS — 2 OCTETS — 50

IV — 80 OCTETS — 2 OCTETS

ZM

ZRV — ZONE VISUALISÉE — ZONE HORS ECRAN

**FIG.9**

I { A B C ---- r s t u----

II

III { ⌂ □□ ············

IV { Z U ----

3/6

0056207

FIG.10

0056207

4/6

## FIG. 11

0056207

**FIG.12**

RECEPTEUR ANTIOPE

| Catégorie | Citation du document avec indication, en cas de besoin, des parties pertinentes | Revendication concernée |
|---|---|---|
| **DOCUMENTS CONSIDERES COMME PERTINENTS** | | |
| X | US - A - 3 936 808 (J.L. O'NEILL)<br><br>* figures 1-4, résumé, colonne 4, ligne 12 à colonne 5, ligne 27; colonne 9, lignes 26-56; colonne 11, ligne 47 à colonne 12, ligne 52 *<br><br>-- | 1-3,5, 7,8 |
| A | IBM TECHNICAL DISCLOSURE BULLETIN, volume 16, no. 9, février 1974, NEW YORK (US)<br>F.M. HARTMANN et al. "Message control for computer output display" pages 2932-2934<br><br>* en entier * | 1 |

**CLASSEMENT DE LA DEMANDE (Int. Cl. 3)**

G 09 G 1/16
H 04 N 7/04

**DOMAINES TECHNIQUES RECHERCHES (Int. Cl. 3)**

G 09 G 1/16
H 04 N 7/04

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 30-03-1982 | VAN ROOST |